(19) Europäisches Patentamt
European Patent Office
Office européen des brevets

(11) Numéro de publication: **0 506 934 B1**

(12) **FASCICULE DE BREVET EUROPEEN**

(45) Date de publication de fascicule du brevet: **18.01.95**

(51) Int. Cl.$^6$: **E21B 43/25**, E21B 33/138, C08L 5/00, C08K 5/00

(21) Numéro de dépôt: **91919472.0**

(22) Date de dépôt: **28.10.91**

(86) Numéro de dépôt internationale : **PCT/FR91/00850**

(87) Numéro de publication internationale : **WO 92/08038 (14.05.92 92/11)**

# (54) UTILISATION DES COMPOSITIONS A BASE DE GELS POUR LA REDUCTION DE LA PRODUCTION D'EAU DANS LES PUITS PRODUCTEURS D'HUILE OU DE GAZ.

(30) Priorité: **29.10.90 FR 9013385**
**28.08.91 FR 9110758**

(43) Date de publication de la demande: **07.10.92 Bulletin 92/41**

(45) Mention de la délivrance du brevet: **18.01.95 Bulletin 95/03**

(84) Etats contractants désignés: **DE FR GB NL**

(56) Documents cités:
**EP-A- 0 104 927**
**EP-A- 0 383 337**
**GB-A- 2 187 773**
**US-A- 4 718 491**
**EP-A- 0 302 544**
**EP-A- 0 390 282**
**US-A- 4 460 751**

(73) Titulaire: **INSTITUT FRANCAIS DU PETROLE**
**4, avenue de Bois Préau**
**F-92502 Rueil-Malmaison (FR)**

(72) Inventeur: **KOHLER, Norbert**
**10, Rue Saint Exupéry**
**F-78300 - Poissy (FR)**
Inventeur: **PIRRI, Rosangela**
**Chemin Mesplède**
**F-84160 Montardon (FR)**

(74) Mandataire: **Andreeff, François et al**
**INSTITUT FRANCAIS DU PETROLE**
**4, avenue de Bois-Préau**
**F-92506 Rueil-Malmaison Cédex (FR)**

**EP 0 506 934 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention a pour objet l'utilisation de nouvelles compositions réticulantes pour polysaccharides, en particulier le scléroglucane. Elle concerne également l'utilisation de gels aqueux incluant ces compositions réticulantes pour la réduction sélective de la production d'eau dans les puits producteurs d'huile ou de gaz. Elles présentent un intérêt particulièrement grand lorsque la perméabilité de la formation traitée au voisinage du puits est élevée et/ou lorsque l'eau produite est chaude et/ou salée, par exemple à une température de formation de 70 à 130 °C et/ou une satinité de l'eau produite au moins égale à celle de l'eau de mer (au moins 30 g/l, exprimée en NaCl). Ces nouvelles compositions sont particulièrement applicables à la récupération assistée des hydrocarbures.

La récupération des hydrocarbures liquides ou gazeux de formations souterraines s'accompagne très fréquemment par la production de grandes quantités d'eau. Dans certains cas bien que des productions significatives d'hydrocarbures soient obtenues, la production d'eau est si importante et les coûts de traitement de l'eau si élevés que la production d'hydrocarbures n'est pas économique. Dans les réservoirs hétérogènes, la production excessive d'eau est souvent occasionnée par la digitation de l'eau injectée par les zones de forte perméabilité. Cela conduit à une percée prématurée de l'eau au puits de production, à un mauvais balayage volumétrique et finalement à une récupération inefficace des hydrocarbures.

De nombreuses méthodes destinées à réduire la production d'eau des formations très perméables ont été proposées et testées sur champ; elles consistent en général à introduire dans la formation, au niveau de la zone à isoler, soit un ciment soit une suspension de particules solides ou de paraffines. Des résines ou des gels de polymères hydrosolubles ont plus récemment été proposés et mis en oeuvre. Tous ces procédés présentent le désavantage de ne pas être sélectifs et de bloquer presque autant la circulation de l'huile ou du gaz que celle de l'eau.

Plus récemment on a proposé l'emploi de polymères hydrosolubles de poids moléculaire élevé en l'absence de tout agent de réticulation ou de pontage, qui présentent l'avantage par rapport aux solutions précédentes et en particulier, celles qui utilisent des résines ou des gels de polymères, de réduire la circulation de l'eau sans affecter de manière gênante la production d'huile ou de gaz

Parmi ces polymères hydrosolubles, les polysaccharides non ioniques et en particulier le scléroglucane s'avèrent particulièrement efficaces pour réduire sélectivement la production d'eau des puits de production tout en préservant la production d'hydrocarbures. C'est ainsi que le brevet des Etats-Unis d'Amérique N° 4,718,491 et la demande de brevet FR 89/1716 de la demanderesse préconisent l'utilisation de différents polysaccharides, et en particulier d'un scléroglucane, en l'absence de tout additif de réticulation ou de pontage, pour la réduction sélective de la perméabilité au voisinage d'un puits de production d'huile ou de gaz. Si le domaine d'application préférentiel de ces polymères couvre les productions d'eau chaude (jusqu'à 130 °C) et salée, son efficacité diminue lorsque la perméabilité de la formation devient élevée et en particulier si elle est supérieure à 1 Darcy.

La demande de brevet français 90/13385 décrit une composition de réticulant comprenant au moins un complexe hydrosoluble à base de cation métallique polyvalent et d'acide organique complexant du cation susceptible de réticuler un polysaccharide, en particulier le scléroglucane.

Le brevet des Etats Unis d'Amérique n° 4,647,312 préconise par ailleurs l'utilisation de complexes de scléroglucane et d'un ion de métal polyvalent tel que le titane, le zirconium et le chrome pour la production de fluides de très forte viscosité et leur utilisation en récupération assistée du pétrole. Bien qu'aucune mention ne soit faite dans ce brevet sur l'aptitude de ces gels à se propager dans une formation souterraine l'augmentation de viscosité obtenue montre qu'il s'agit de gels forts qui ne devraient avoir aucun caractère sélectif et donc réduire autant la production d'eau que celle des hydrocarbures. De plus, il est suggéré d'utiliser le tétrachlorure de zirconium, mais ce dernier présente l'inconvénient d'être insoluble dans une eau de salinité proche de celle de l'eau de mer.

Le brevet européen EP-A- 302 544 décrit une méthode de fracturation des formations souterraines en utilisant une composition comportant de la gomme guar en tant que polysaccharide non ionique et un complexe à base de zirconium et d'acide lactique.

L'objet de la présente invention remédie aux inconvénients cités et concerne donc l'utilisation de nouvelles compositions de gels pour la réduction sélective de la production d'eau dans les puits producteurs d'huile ou de gaz.

De manière plus précise, l'invention concerne un procédé pour la réduction sélective de la perméabilité à l'eau dans une formation souterraine productrice d'huile et/ou de gaz selon lequel on injecte par au moins un puits producteur d'hydrocarbures une composition de gels aqueux dans la formation entourant le puits producteur à un débit et/ou à une pression adéquates et l'on remet le puits en production, caractérisé en ce que ladite composition de gels aqueux comprend une solution d'au moins un polysaccharide non ionique et

au moins un complexe à base de cation métallique polyvalent hydrosoluble et d'acide organique complexant du cation, susceptible de réticuler ledit polysaccharide, ledit complexe étant à une concentration, exprimée en poids de dioxyde de métal, de 2 à 100 parties par million de parties de la solution.

Avantageusement, on utilise le zirconium Zr(IV) ou le titane Ti(IV). L'acide organique avantageusement préconisé est un acide alphahydroxylé.

Parmi les acides organiques alphahydroxylés, on choisira plus particulièrement un acide alphahydroxycarboxylique tel que l'acide lactique ou l'acide malique.

On a obtenu d'excellents résultats en terme de sélectivité lorsque l'acide est de l'acide lactique et le cation du zirconium.

Parmi les polysaccharides satisfaisant aux critères de l'invention on préférera les polysaccharides non ioniques comme les glucanes et en particulier le scléroglucane et le schizophyllane, les gommes de galactomannane comme par exemple la gomme guar et en particulier ses dérivés de substitution comme par exemple l'hydroxypropylguar et le carboxyméthylguar et leurs mélanges.

Parmi les polysaccharides non ioniques de l'invention la préférence sera donnée au scléroglucane. Ce dernier est un homo-polysaccharide ramifié non ionique dont la chaîne principale est constituée de successions de motifs de type $\beta$ 1-3 D-glucose, substituée tous les trois motifs par une unité $\beta$ 1-6 D-glucose. Le scléroglucane est obtenu par fermentation de milieux contenant des hydrates de carbone initiée par des champignons Sclerotium et notamment par un champignon de type Sclerotium Rolfsii (ATCC 15206).

Les complexes de zirconium ou de titane susceptibles de former un gel en milieu aqueux avec le scléroglucane sont avantageusement des complexes de zirconium ou de titane à base d'acides malique ou lactique, le rapport molaire acide alphahydroxycarboxylique/zirconium ou titane étant préférentiellement compris entre 0,5 et 4 et plus particulièrement compris entre 2 et 4 avec l'acide lactique et 0,5 et 1,5 avec l'acide malique. On peut citer à titre d'exemple les produits commerciaux vendus par SCPI (Société des Produits Chimiques Industriels) sous les noms de ZIRCOMPLEX PN ou ZIRCOMPLEX PA ou encore par la société ZIRTECH basée à Gainesville, Florida sous le nom de ZIRTECH LA.

Les concentrations en poids en polymère pour l'obtention de gels conformément à l'invention varient en général entre 150 et 5000 ppm et de préférence entre 200 et 2000 ppm.

Les concentrations en poids de complexe de métal polyvalent et de préférence de titane ou de zirconium, exprimés en poids d'oxyde de métal, varient entre 2 et 100 ppm, avantageusement de 3 à 95 ppm et de préférence entre 5 et 25 ppm. On pourra même utiliser des concentrations de 100 à 10 000 ppm en poids d'oxyde de métal, avantageusement de 120 à 8 000 ppm, et préférentiellement de 1000 à 5000 ppm dans certaines applications concernant des réservoirs très perméables ou fissurés où les zones productrices d'eau et d'hydrocarbures sont très nettement séparées.

Par milieu aqueux, il est entendu l'eau avec tous les constituants susceptibles d'y être dissous, c'est-à-dire les sels, mais également d'autres additifs nécessaires à une application comme des constituants basiques tels que la soude, ou encore des tensio-actifs ou des bactéricides.

La composition selon l'invention, notamment dans le domaine de concentrations préconisé (2-100 ppm) peut être utilisée pour réduire sélectivement la perméabilité à l'eau dans un puits de production sans affecter sensiblement la perméabilité aux hydrocarbures. En effet, après avoir constaté au niveau de ces puits que l'on produisait plus d'eau que d'huile, essentiellement par les zones de plus forte perméabilité, on arrête le pompage ou le système de production de ces puits et on injecte la composition selon l'invention dans lesdits puits notamment lorsque la gamme de concentrations en oxyde de métal correspond à la formation d'un gel faible (2-100 ppm).

Après injection d'un volume correspondant à une extension radiale de la composition de 1 à 30 mètres à partir de ces puits, suivie éventuellement d'un temps de fermeture de quelques jours pour faciliter d'une part l'adsorption du polymère et d'autre part pour permettre à la réaction de gélification d'aller jusqu'à son achèvement, on remet lesdits puits en production et l'on constate que tout en produisant moins d'eau par les zones de forte perméabilité, la production d'hydrocarbures par les zones de faible perméabilité est augmentée. La remise des puits en production s'effectue en général progressivement et autant que possible à des débits et/ou pressions égaux ou inférieurs à ceux qui avaient été utilisés pour l'injection de la composition aqueuse.

Une première méthode de mise en place de la formulation selon l'invention consiste à mélanger de manière simultanée tous les constituants du gel en tête de puits et à les injecter simultanément dans la formation. La réaction de gélification se fait ensuite au sein de la formation à traiter. Cette méthode s'applique tout particulièrement lorsque l'on désire former un gel faible dans une zone de la formation productrice simultanément d'eau et d'hydrocarbures.

Une deuxième méthode de mise en place de la formulation selon l'invention, et correspondant à l'utilisation de gels forts dans une zone de la formation essentiellement productrice d'eau, consiste à faire des injections successives alternées d'abord de solution de réticulant et ensuite de polymère. On réalise ainsi, par réticulations successives, une multicouche adsorbée de polymère par l'intermédiaire de l'agent de réticulation pouvant aller jusqu'à la formation d'un gel compact avec bouchage de la zone productrice d'eau.

De préférence, l'injection du mélange polysaccharide non ionique et de complexe réticulant dans le puits producteur est effectuée sous un débit et/ou une pression suffisante pour permettre une introduction aisée dans la formation souterraine mais à une pression inférieure à la pression limite de couche ou pression de fracturation.

Par débit et/ou pression suffisantes, on entend un débit et/ou une pression correspondant à un gradient de cisaillement d'au moins 50 $s^{-1}$. La viscosité du mélange polysaccharide-complexe réticulant à ce gradient est de préférence inférieure à 10 mPa.s, par exemple de 1 à 9 mPa.s (1 mPa.s = 1 cP).

Pour la mise en oeuvre de la formulation selon l'invention et son injection dans un puits producteur d'hydrocarbures on travaillera avantageusement à un pH inférieur à 9, la valeur du pH dépendant néanmoins de la température du réservoir à traiter. Pour les applications à haute température on injectera de préférence la formulation à un pH voisin de la neutralité.

Les exemples qui suivent sont destinés à illustrer les divers avantages liés à l'utilisation des formulations conformément à l'invention. Ils comportent des tests en éprouvettes permettant l'établissement des diagrammes de phase sol/gel ainsi que des tests de mise en place en milieu poreux dans des conditions les plus proches possibles de celles existant dans la formation pétrolifère.

**Tests en éprouvettes**

***Exemple 1*** : Des tests en tube ont été réalisés tout d'abord sur des solutions brutes de scléroglucane poudre, ACTIGUM CS 11 PVE de la Société SANOFI BIOINDUSTRIES, FRANCE, dans de l'eau contenant 50 g/l de NaCl. Différentes solutions à des concentrations croissantes en polymère (de 125 ppm à 3000 ppm) ont été préparées, leur viscosité mesurée à l'aide d'un viscosimètre LS 30 de la société CONTRAVES pour un gradient de cisaillement de 10 $s^{-1}$. Des concentrations croissantes (5 à 100 ppm) en $ZrO_2$ de ZIRTECH LA (7 % en poids de $ZrO_2$) fabriqué par la société ZIRTECH, USA ont été ajoutés à chacune de ces solutions de polymère.

Les solutions ont été mises à vieillir pendant 5 jours dans une étuve thermostatée à 30 °C, les viscosités à nouveau mesurées. Dans le tableau 1 sont reproduits en face de chaque concentration en polymère les quantités minimales de complexe de Zirconium nécessaires pour obtenir une augmentation de viscosité d'au moins 50 % de la solution de polymère par suite d'une réaction de gélification à 30 °C. Il est à noter que par suite de l'addition du complexe de zirconium le pH de la solution de polymère évolue progressivement de 6,5 à 7,3. Par ailleurs aucune gélification ou augmentation sensible de viscosité n'est observée pour des concentrations en polymère inférieures à 150 ppm (concentration de recouvrement).

Tableau 1

| Etablissement du diagramme sol/gel pour le couple lactate de zirconium-scléroglucane (après 5 jours à 30 °C) | |
|---|---|
| Scléroglucane (ppm) | $ZrO_2$ (ppm) |
| 125 | pas de gélification |
| 250 | 15 |
| 500 | 10 |
| 1000 | 15 |
| 2000 | 30 |
| 3000 | 50 |

***Exemple 2*** : Les tests en tubes de l'exemple 1 ont été renouvelés à la différence près que les différents échantillons ont été mis à vieillir dans une étuve thermostatée à 80 °C et que les viscosités ont été mesurées au bout de 3 jours à cette température. Les résultats du tableau 2 montrent que les concentrations minimales de lactate de zirconium sont sensiblement les mêmes à 80 °C et à 30 °C mais que la cinétique de réaction est sensiblement supérieure à 80 °C (mesures après 3 jours au lieu de 5 jours dans

l'exemple 1).

Tableau 2

| Etablissement du diagramme sol/gel pour le couple lactate de zirconium-scléroglucane (après 3 jours à 80 °C) | |
|---|---|
| Scléroglucane (ppm) | $ZrO_2$ (ppm) |
| 125 | pas de gélification |
| 250 | 15 |
| 500 | 15 |
| 1000 | 20 |
| 2000 | 30 |
| 3000 | 50 |

***Exemple 3*** : Les tests en tube des exemples précédents ont été renouvelés en dispersant cette fois de l'hydroxypropylguar poudre, GALACTASOL 476 de la société AQUALON, France dans de l'eau contenant 50 g/l de NaCl. Une augmentation sensible de la viscosité correspondant à une gélification de la solution de polymère est observée après 3 jours à 30 °C et 1 jour à 80 °C pour des solutions contenant respectivement 2000 ou 3000 ppm de polymère et du ZIRCOMPLEX PA de la Société des Produits Chimiques Industriels (SCPI) titrant 5 ppm en $ZrO_2$. Notons que si dans ces essais réalisés à pH 7 nous augmentons le pH à 9 par addition d'une base nous obtenons une gélification quasi-instantanée des solutions de polymère même à température ambiante.

**Tests en milieu poreux**

***Exemples 4 à 8*** : En vue de tester conformément à l'invention l'efficacité des formulations à base de gels faibles à réduire la perméabilité à l'eau sans affecter la perméabilité aux hydrocarbures, on a appliqué à différents milieux poreux la procédure expérimentale décrite dans la communication de A. Zaitoun et N. Kohler à la Société des Ingénieurs Pétroliers sous la référence SPE 18085 d'octobre 1988 et comprenant les étapes suivantes :

1. Saturation du milieu poreux avec de la saumure et détermination de la perméabilité initiale à l'eau $k_{wi}$
2. Injection d'huile jusqu'à la saturation irréductible en eau $S_{wi}$.
3. Injection de saumure jusqu'à la saturation irréductible en huile $S_{or}$.
4. On répète les opérations 2 et 3 jusqu'à ce que les valeurs extrêmes de perméabilités relatives $k_{rw}$ et $k_{ro}$ soient reproductibles.
5. A la saturation irréductible en huile, injection du polymère seul (référence) ou du polymère + agent réticulant. Arrêt de la circulation des fluides pour permettre à la réaction de gélification d'aller jusqu'à son achèvement.
6. Injection de saumure jusqu'à ce que la totalité du polymère non adsorbé soit déplacé. On vérifie que la viscosité de l'effluent correspond à celle de la saumure. On trace la courbe de réduction de perméabilité à l'eau $R_{kw}$ en fonction du débit ou du gradient de cisaillement $\gamma$.
7. Injection d'huile jusqu'à la saturation irréductible en eau Swi. Détermination de la nouvelle valeur de $k_{ro}$ à fort débit (méthode de Welge).
8. Injection d'eau jusqu'à $S_{or}$ et détermination de la nouvelle valeur de $k_{rw}$ à fort débit.

Le gradient de cisaillement $\gamma$ en milieu poreux est calculé de la façon suivante :

$$\gamma = \frac{4v}{r}$$

où v est la vitesse superficielle calculée par :

$$v = \frac{4\,q}{S\,\varphi\,(1 - S_{or})}$$

où q est le débit d'injection, S la surface de la face d'entrée du milieux poreux, $\phi$ la porosité r le rayon moyen des pores calculé par :

$$r = \frac{8k\ k_{rw}}{\varphi\ (1 - S_{or})}$$

où k est la perméabilité initiale à l'eau du milieu poreux.
La réduction de perméabilité à la saumure $R_{kw}$ est une mesure de la viscosité apparente de la saumure circulant dans le milieu poreux après mise en place du polymère ou du gel.

Les mesures de perméabilités relatives $k_{rw}$ et $k_{ro}$, effectuées au même état de saturation $S_w$ et pour un même débit q, correspondent aux pertes de charges dues à la circulation des fluides, eau ou huile, avant et après mise en place du polymère ou du gel.

**Exemple 4**

La première expérience de mise en place de la formulation selon l'invention a été réalisée sur un massif de grès des Vosges inséré dans une cellule Hassler, l'ensemble étant mis dans une étuve à 95 °C. Des capteurs de pression permettent de mesurer les pertes de charge aux bornes de la carotte et une pompe volumétrique permet d'injecter les fluides à débit constant.

La perméabilité initiale à l'eau $k_{wi}$ (140 g/l de salinité totale) a été trouvée égale à 1,5 D. On procède successivement à l'injection d'huile ($\mu$ = 1,97 cP à 95 °C) jusqu'à sa saturation irréductible en eau et l'on mesure la perméabilité relative à l'huile ($k_{ro}$ = 0,92, $S_{wi}$ = 0,34 et $k_{ro}$ = 0,28, $S_w$ = 0,48), puis à l'injection d'eau jusqu'à saturation irréductible en huile et l'on mesure la perméabilité relative à l'eau ($k_{rw}$ = 0,05, $S_{or}$ = 0,46).

On procède ensuite à l'injection d'une solution à 1,5 g/l de scléroglucane poudre, ACTIGUM CS 11 PVE de la société SANOFI BIOINDUSTRIES, dispersé dans l'eau salée au débit q = 20 $cm^3$/h. L'adsorption du polymère est trouvée égale à 120 $\mu$g/g.

On procède ensuite à l'injection de saumure pour déplacer le polymère non adsorbé et l'on mesure ensuite la réduction de perméabilité à l'eau $R_{KW1}$ à différents débits d'injection d'eau (tableau 3).

On sature ensuite le massif à l'aide d'un mélange de scléroglucane (Cp = 1,5 g/l) et de complexe de zirconium, ZIRTECH LA

$$(C_{ZrO_2} = 30\ ppm),$$

mélange qui donne lieu à une réaction de gélification en tube à la température de 95 °C, et l'on arrête toute circulation de fluide pendant 16 heures. On déplace par injection d'eau l'excédent du mélange qui ne s'est pas adsorbé ou qui n'a pas réagi et l'on procède à une nouvelle mesure de la réduction de perméabilité à l'eau à différents débits $R_{KW2}$ (tableau 3).

Tableau 3

| Grès des Vosges à 95 et 120 °C Réductions de perméabilité à l'eau après polymère seul ($R_{KW1}$) et après polymère + lactate de zirconium ($R_{KW2}$) | | | |
|---|---|---|---|
| Débit q($cm^3$/h) | Gradient de cisaillement $\gamma$($s^{-1}$) | $R_{KW1}$ polymère seul | $R_{KW2}$ polymère + complexe Zr |
| 4 | 12,4 | 5,00 | 64,3 |
| 10 | 31 | 3,80 | 42,4 |
| 30 | 93 | 3,13 | 24,9 |
| 50 | 155 | 2,76 | 12,1 |

On constate que les valeurs de réduction de perméabilité à l'eau après injection du mélange selon l'invention sont largement supérieures à celles mesurées après injection de polymère seul.

De plus il est possible de montrer en utilisant la méthode de Welge que la perméabilité relative à l'huile ($k_{ro}$ = 0,24, $S_w$ = 0,48) n'est pas affectée par la présence du gel faible alors que la perméabilité relative à

l'eau ($k_{rw}$ = 0,011, $S_w$ = 0,54) est fortement diminuée par rapport à la perméabilité initiale ($k_{rw}$ = 0,05 à même valeur de saturation en eau).

La formulation selon l'invention réduit donc fortement la perméabilité à l'eau sans affecter sensiblement la perméabilité à l'huile. La système reste donc sélectif.

La température de l'étuve a ensuite été portée à 120 °C en vue de tester la stabilité de la formulation à cette température en milieu poreux. De l'eau de mer synthétique, soigneusement désoxygénée par addition de 100 ppm de sulfite de sodium a été injectée en continu sous atmosphère d'azote à un débit de 1 ml/h dans le milieu poreux et les pressions mesurées quotidiennement pendant 14 jours à 120 °C. On constate que la valeur de réduction de perméabilité mesurée à ce débit ($R_k$ = 103) s'est avérée particulièrement stable durant cette expérience (valeur finale $R_k$ = 95).

La formulation selon l'invention permet donc de réduire la perméabilité à l'eau même à cette température pendant des temps assez prolongés.

**Exemple 5**

L'expérience précédente est renouvelée en utilisant cette fois un massif de sable d'ENTRAIGUES EN 38 reconstitué dans une cellule en acier inoxydable Hastelloy, le tout placé dans une étuve à 80 °C.

La perméabilité relative à l'eau (eau de mer reconstituée) du massif est trouvée égale à 2,32 D. On procède successivement à l'injection d'huile ($\mu$ = 2,43 cP à 80 °C) jusqu'à saturation irréductible en eau et l'on mesure comme précédemment la perméabilité relative à l'huile pour 2 valeurs de saturation en eau ($k_{ro}$ = 0,615, $S_w$ = 0,30 et $k_{ro}$ = 0,22, $S_w$ = 0,43). Par suite de l'injection d'eau, on détermine les valeurs initiales de perméabilité relative à l'eau ($k_{rw}$ = 0,30, $S_w$ = 0,79).

L'injection d'une solution de scléroglucane (Cp = 1,5 g/l) dans l'eau de mer donne lieu à une adsorption irréversible de ce dernier égale à 80 $\mu$g/g.

Suite à l'injection d'eau et au déplacement total du polymère non adsorbé on observe les valeurs de réduction de perméabilité $R_{KW1}$ du tableau 4.

Tableau 4

| Sable d'Entraigues à 80 °C : Réductions de perméabilité à l'eau après polymère seul ($R_{KW1}$) et après polymère + lactate de zirconium ($R_{KW2}$) | | | |
|---|---|---|---|
| Débit q($cm^3$/h) | Gradient de cisaillement $\gamma$($s^{-1}$) | $R_{KW1}$ polymère seul | $R_{KW2}$ polymère + complexe Zr |
| 10 | 10,2 | 4,39 | 179,8 |
| 20 | 20,4 | 2,74 | 118,0 |
| 30 | 30,6 | 2,30 | 95,8 |
| 50 | 51 | 1,97 | 74,1 |
| 100 | 102 | 1,75 | 57,7 |
| 200 | 204 | 1,48 | 45,0 |

On procède ensuite à l'injection d'une formulation selon l'invention contenant 1,5 g/l de scléroglucane poudre et 25 ppm de complexe de zirconium ZIRCOMPLEX PA de la SCPI titrant 7,3 % en poids de $ZrO_2$, formulation susceptible de former un gel faible à 80 °C, et on arrête toute circulation de fluide pendant 16 heures.

On procède ensuite comme précédemment à l'injection d'eau et à la mesure de la réduction de perméabilité à l'eau à différents débit $R_{KW2}$ (tableau 4). Les valeurs obtenues sont ici également largement supérieures à celles consécutives à l'adsorption du polymère seul.

La sélectivité du système est prouvée en comparant les perméabilités relatives à l'huile et à l'eau avant et après mise en place du gel faible (méthode de Welge). La perméabilité relative à l'eau $k_{rw}$ passe ainsi d'une valeur initiale égale à 0,30 à une valeur finale égale à 0,012 pour un même état de saturation $S_w$ = 0,79. La perméabilité relative à l'huile $k_{ro}$ passe d'une valeur initiale égale à 0,22, $S_w$ = 0,43 à une valeur finale très voisine de 0,17 au même état de saturation.

La sélectivité de la formulation selon l'invention est ainsi à nouveau démontrée.

**Exemple 6**

Les expériences précédentes sont reconduites en utilisant cette fois un milieu poreux constitué de calcaire de St Waast les Mello inséré dans une cellule Hassler et mis à l'étuve à 80 ° C.

La perméabilité initiale à l'eau de mer est trouvée égale à 931 mD. Le milieu poreux est mis en huile résiduelle ($\mu$ = 2,40 cP) et la perméabilité à l'eau de mer en présence d'huile résiduelle $k_{SOR}$ est trouvée égale à 157 mD.

On procède comme précédemment à l'injection d'une solution de scléroglucane poudre (Cp = 1500 ppm) servant de référence puis à l'injection d'un mélange de polymère (Cp = 1500 ppm) et de ZIRTECH LA

$$(C_{ZrO_2} = 24 \text{ ppm}).$$

Après un arrêt de 19 heures à 80 ° C, on mesure les valeurs de réduction de perméabilité à l'eau.

Le tableau 5 rassemble les résultats de réduction de perméabilité à l'eau après mise en place respective du polymère seul puis de la formulation selon l'invention.

Un test de vieillissement a également été effectué en injectant à faible débit de l'eau de mer pendant 13 jours à 80 ° C et en procédant à une mesure journalière de la réduction de perméabilité à l'eau. Le tableau 5 montre que les valeurs obtenues sont parfaitement stables au cours du temps ($R_{KW3}$).

De la même façon que précédemment on démontre que le gel faible est sélectif en milieu carbonaté, réduisant fortement la perméabilité à l'eau sans altérer dans une grande mesure la perméabilité à l'huile.

Tableau 5

| Calcaire de St Waast les Mello à 80 ° C Réductions de perméabilité à l'eau après polymère seul ($R_{KW1}$) et après polymère + complexe de zirconium avant ($R_{KW2}$) et après ($R_{KW3}$) vieillissement. | | | | |
|---|---|---|---|---|
| Débit q ($cm^3/h$) | Gradient de cisaillement $\gamma$ ($s^{-1}$) | $R_{KW1}$ polymère seul | $R_{KW2}$ | $R_{KW3}$ |
| | | | polymère + complexe Zr | |
| 2 | 4,9 | 11,80 | 64,6 | 103,50 |
| 10 | 24,5 | 4,48 | 23,54 | 24,95 |
| 20 | 49 | 3,98 | 16,66 | 16,67 |
| 50 | 122,5 | 3,30 | 11,52 | 12,53 |
| 100 | 245 | 3,01 | 9,50 | 10,3 |

**Exemple 7**

Dans un massif de sable d'Entraigues mis dans une étuve à 50 ° C et dont la perméabilité à l'eau de mer synthétique (30 g/l de NaCl et 3 g/l de $CaCl_2.2H_2O$) a été trouvée égale à 4,8 D, on a procédé à l'injection d'une solution à 2500 ppm d'hydroxypropylguar, GALACTASOL 476 de la Société AQUALON, dans l'eau de mer au débit de 20 ml/h. Cette injection de polymère a été suivie d'injection d'eau de mer en vue de déplacer l'excès de polymère non adsorbé et on a mesuré une réduction de perméabilité à l'eau de 1,8 pratiquement indépendante du débit d'injection d'eau. Dans le même massif on a procédé ensuite au même débit de 20 ml/h à l'injection d'un mélange dans l'eau de mer synthétique contenant 2500 ppm d'hydroxypropylguar, 10 ppm de ZIRCOMPLEX PN (titrant 9,9 % en poids de $ZrO_2$) et 100 ppm d'acide citrique et après un arrêt de la circulation pendant 1 nuit à 50 ° C on a procédé comme précédemment à l'injection d'eau de mer synthétique pour déplacer l'excès de polymère. La réduction de perméabilité finale à l'eau de mer a été trouvée égale à 290 à ce même débit de 20 ml/h.

**Exemple 8** : Mise en place d'un gel fort.

Dans un massif de sable d'Entraigues à 80 ° C saturé en eau de mer synthétique et dont la perméabilité a été trouvée égale à 4,3 D on a procédé à l'injection alternée de 1,5 volume poreux d'une solution de ZIRCOMPLEX PN (titrant 1000 ppm de $ZrO_2$) dans l'eau de mer au débit de 50 ml/h suivi de 1,5 volume

poreux d'une solution de scléroglucane (Cp = 500 ppm) dans l'eau de mer. On arrête toute circulation pendant 24 heures pour permettre la réaction de gélification de se faire. On procède ensuite à l'injection d'eau de mer au même débit de 50 ml/h et on constate que les pertes de charge aux bornes du milieu poreux ont fortement augmenté et que la perméabilité à l'eau de mer est devenue très faible. Par calcul on obtient une reduction de perméabilité à l'eau supérieure à 1000.

L'injection alternée de réticulant et de polymère réduit considérablement la perméabilité à l'eau par suite de la formation d'un gel fort. Un essai d'injection d'huile dans ce milieu poreux donne lieu également à des pertes de charge très élevées montrant ainsi que la formulation utilisée n'est plus sélective et bloque aussi bien le passage de l'eau que celui de l'huile.

**Revendications**

1. Procédé pour la réduction sélective de la perméabilité à l'eau dans une formation souterraine, productrice d'huile et/ou de gaz selon lequel on injecte à pH inférieur à 9 par au moins un puits producteur d'hydrocarbures une composition de gels aqueux dans la formation entourant le puits producteur à un débit et/ou à une pression inférieure à la pression de fracturation de la formation souterraine, à un gradient de cisaillement d'au moins 50 $s^{-1}$, la viscosité étant inférieure à 10 mPa.s audit gradient de cisaillement et l'on remet le puits en production, ladite composition consistant en une solution d'au moins un polysaccharide non ionique et au moins un complexe à base de zirconium ou de titane et d'acide organique alphahydroxylé complexant du cation susceptible de réticuler ledit polysaccharide le polysaccharide non ionique étant choisi dans le groupe formé par les glucanes, les gommes de galactomannane et leurs mélanges et ledit complexe étant à une concentration, exprimée en poids de dioxyde de métal, de 2 à 100 parties par million de parties de la solution.

2. Procédé selon la revendication 1 dans lequel le polysaccharide non ionique est le scléroglucane.

3. Procédé selon l'une des revendications 1 à 2 dans lequel l'acide organique complexant du cation est l'acide lactique ou l'acide malique.

4. Procédé selon l'une des revendications 1 à 3 dans lequel le rapport molaire acide lactique/zirconium ou titane est compris entre 2 et 4.

5. Procédé selon l'une de revendications 1 à 3 dans lequel le rapport molaire acide malique zirconium ou titane est compris entre 0,5 et 1,5.

6. Procédé selon l'une des revendications 1 à 5 dans lequel la concentration du complexe est de 3 à 95 ppm, de telle sorte que la perméabilité à l'eau est fortement réduite sans que la perméabilité à l'huile ne soit sensiblement affectée.

7. Procédé selon l'une des revendications 1 à 6 dans lequel la concentration du complexe est de 5 à 25 ppm.

8. Procédé selon l'une des revendications 1 à 7 caractérisé en ce qu'il est appliqué au cas où l'eau de la formation est à une température de 70 à 130 ° C.

9. Procédé selon l'une des revendications 1 à 8 dans lequel l,eau de la formation a une salinité d'au moins 30 g/l, exprimée eu NaCl.

**Claims**

1. Process for the selective reduction of water permeability in a subterranean formation, and producting oil and/or gas therefrom, said process comprising injecting a composition of aqueous gels at pH less than 9 through at least one hydrocarbon-producting well into the formation surrounding a producing well at a flow rate and/or at a pressure less than the breakdown pressure of the subterranean formation the viscosity being less than 10 mPa.s at said shear gradient,
at a shear gradient of at least 50 $s^{-1}$, and the well is put back into production, wherein said composition consists essentially of a solution of at least one nonionic polysaccharide, which is a glucan, galactomannane gum or a mixture thereof, and at least one complex of zirconium or titanium and an

alphahydroxyl complexing organic acid of the cation, able to crosslink said polysaccharide, said complex having a concentration, expressed by weight of metal dioxide, of 2 to 100 parts per million of parts of the solution.

**2.** Process according to claim 1, wherein the nonionic polysaccharide is scleroglucan.

**3.** Process according to claim 1, wherein the complexing organic acid of the cation is lactic acid or malic acid.

**4.** Process according to any one of claims 1 to 3, wherein the lactic acid/zirconium or titanium molar ratio is between 2 to 4.

**5.** Process according to any one of claims 1 to 3, wherein the malic acid/titanium or zirconium molar ratio is between 0.5 and 1.5.

**6.** Process according to any one of claims 1 to 5 wherein the concentration of the complex is 3 to 95 ppm, so that the water permeability is greatly reduced without the oil permeability being appreciably affected.

**7.** Process according to any one of claims 1 to 6, wherein the concentration of the complex is 5 to 25 ppm.

**8.** Process according to any one of claims 1 to 7, wherein the water of the subterranean formation is at a temperature of 70° to 130°C.

**9.** Process according to any one of claims 1 to 8, wherein the salinity of the water in the subterranean formation is at least 30 g/l expressed in NaCl.

**Patentansprüche**

**1.** Verfahren zur selektiven Reduzierung der Wasserdurchlässigkeit einer Öl und/oder Gas hervorbringenden unterirdischen Formation, nachdem man bei einem pH-Wert von unter 9 durch wenigstens eine Förderbohrung für Kohlenwasserstoffe eine wäßrige Gelzusammensetzung in die die Förderbohrung umgebende Formation mit einem Durchsatz und/oder einen Druck unter dem Durchbrechungsdruck der unterirdischen Formation, mit einem Schergradienten von wenigstens 50 $s^{-1}$, wobei die Viskosität auf dem Schergradienten unter 10 mPa s beträgt, einführt und man die Förderbohrung wieder aufbaut, wobei die Zusammensetzung aus einer Lösung wenigstens eines nicht-ionischen Polysaccharides und wenigstens eines Komplexes auf der Basis von Zirkonium oder Titan und alphahydroxylierten organischen Säuren, die das Kation komplexieren, bestehen und geeignet sind, das Polysaccharid zu vernetzen, wobei das nicht-ionische Polysaccharid aus der Gruppe ausgewählt ist, bestehend aus Glukanen, Galactomannangummen und deren Mischungen, und der Komplex eine Konzentration, ausgedrückt in Gewicht des Metalloxides, von 2 bis 100 ppm der Lösung aufweist.

**2.** Verfahren nach Anspruch 1, worin das nicht-ionische Polysaccharid Skleroglukan ist.

**3.** Verfahren nach einem der Ansprüche 1 und 2, worin die das Kation komplexierende organische Säure Milch- oder Maleinsäure ist.

**4.** Verfahren nach einem der Ansprüche 1 bis 3, worin das molare Verhältnis von Milchsäure/Zirkonium oder Titan zwischen 2 und 4 liegt.

**5.** Verfahren nach einem der Ansprüche 1 bis 3, worin das molare Verhältnis von Milchsäure/Zirkonium oder Titan zwischen 0,5 und 1,5 liegt.

**6.** Verfahren nach einem der Ansprüche 1 bis 5, worin die Konzentration des Komplexes 3 bis 95 ppm beträgt, derart, daß die Wasserdurchlässigkeit stark reduziert wird, ohne daß die Öldurchlässigkeit wesentlich beeinflußt wird.

7. Verfahren nach einem der Anscprüche 1 bis 6, worin die Konzentration des Komplexes 5 bis 25 ppm beträgt.

8. Verfahren nach einem der Ansprüche 1 bis 7, dadurch gekennzeichnet, daß es angewendet wird, wenn das Formationswasser eine Temperatur von 70 bis 130° C besitzt.

9. Verfahren nach einem der Ansprüche 1 bis 8, worin das Formationswasser einen Salzgehalt von wenigstens 30 g/l, ausgedrückt in NaCl, besitzt.